# EUROPÄISCHE PATENTSCHRIFT

(11) **EP 2 070 687 B1**
(45) Veröffentlichungstag und Bekanntmachung des Hinweises auf die Patenterteilung: **24.10.2012**
(21) Anmeldenummer: 08021420.8
(22) Anmeldetag: 10.12.2008
(51) Int. Cl.: B29C 65/32, B65B 7/28, B65B 47/02, B65B 51/22, H05B 6/02

(54) **Verpackungsmaschine mit Induktionsheizung**
Packaging machine with induction heating
Machine d'emballage dotée d'un chauffage à induction

(30) Priorität: 11.12.2007 DE 102007059812
(43) Veröffentlichungstag der Anmeldung: 17.06.2009
(73) Patentinhaber: Multivac Sepp Haggenmüller GmbH & Co. KG, 87787 Wolfertschwenden (DE)
(72) Erfinder: Capriotti, Luciano, 87730 Bad Grönenbach (DE)
(74) Vertreter: Grünecker, Kinkeldey, Stockmair & Schwanhäusser

(56) Entgegenhaltungen:
- EP-A- 0 731 027
- DE-A1- 4 202 883
- DE-B- 1 160 564
- FR-A- 2 602 625
- US-A1- 2002 185 767
- US-E- R E33 467

## Beschreibung

Die vorliegende Erfindung betrifft eine Verpackungsmaschine nach dem Oberbegriff des Anspruchs 1.

### Stand der Technik

Handelsübliche Verpackungsmaschinen zum Verpacken von Packgut umfassen häufig Heiz-, Form- und/oder Siegelwerkzeuge zur Herstellung und/oder Versiegelung einer mit Packgut zu füllenden bzw. bereits gefüllten, vorzugsweise muldenförmigen Verpackung.

Als Verpackungsmaschine kommen häufig "Traysealer" zur Verwendung, bei denen beispielsweise bereits vorgefertigte Packungsmulden oder Packungsschalen mit Packgut gefüllt und anschließend versiegelt werden, vorzugsweise mit einer Folie.

Als zweite wesentliche Art von Verpackungsmaschinen sind sogenannte "Tiefziehmaschinen" bzw. "Rollenmaschinen" bekannt. Hierbei wird sowohl ein mit Packgut zu befüllendes, vorzugsweise mulden- bzw. schalenförmiges Verpackungsbehältnis in der entsprechend gewünschten Form und Größe erzeugt, als auch nach dessen Befüllung eine Versiegelung vorgenommen.

Als Materialien zur Herstellung der Verpackung werden in der Regel Kunststofffolien verwendet, die mittels entsprechenden Heizvorrichtungen erwärmt und durch entsprechende Formwerkzeuge ausgeformt werden, in der Regel durch einen Tiefziehvorgang. Je nach Größe und/oder Art und/oder Dicke der zu verarbeitenden Folie muss neben einer sogenannten Grundheizung stromaufwärts noch eine sogenannte "Vorwärmheizung" vorgesehen werden, um eine ausreichende Durchwärmung der zu verformenden Folie zu erreichen.

Die Versiegelung der mit Packgut gefüllten Verpackung erfolgt üblicherweise durch Erwärmen einer Deckelfolie (Oberfolie) und gegebenenfalls der befüllten Schale an den zur Herstellung einer Versiegelungsnaht vorgesehenen Bereichen. Die Siegelwirkung wird in der Regel durch Verschmelzen der Deckelfolie mit der Behältnis- bzw. Mulden- oder Schalenfolie (Unterfolie) erzielt, üblicherweise durch Aufbringen eines zusätzlichen Anpressdrucks. Bekannt sind aber auch andere Verfahren, bei denen z.B. eine Klebeschicht zwischen den beiden miteinander zu verbindenden Folien soweit erwärmt wird, dass sich diese beiden in versiegelnder Weise miteinander verbinden.

Bisher bekannte Heizsysteme zur Erwärmung der Folien in den betreffenden Bearbeitungsvorrichtungen, wie z.B. einer Form- und/oder Siegelvorrichtung, umfassen meistens eine temperaturgeregelte elektrische oder mittels anderer Energie gespeiste Wärmequelle als sogenannte Heizung sowie zur Temperaturstabilisierung neben einem mit einer ausreichend großen Masse versehenen Heizkörper üblicherweise auch noch eine Kühlung. Häufig umfasst eine solche Kühlung ein trink- bzw. brauchwasserbasiertes Leitungssystem, um die zu viel eingespeiste Wärmeenergie zur Vermeidung von durch Übertemperierung der zu verarbeitenden Folie hervorgerufenen Schäden zu verhindern. Zusätzlich ist auch eine Kühlung der erhitzten Materialien möglich, um eine Verletzungsgefahr des Bedienpersonals, z.B. durch Verbrennungen bei möglicher Berührung vorzubeugen.

Aus dem Stand der Technik ist ferner durch die Druckschrift EP 1 228 853 A2 ein Apparat zum Herstellen von Behältern bekannt, bei dem ein Verschweißwerkzeug erhitzt werden soll. Dabei wird Wärme auf das Werkzeug übertragen, die z.B. induktiv erzeugt werden kann. Eine in der Druckschrift genannte Aufgabe der Erfindung besteht darin, die Austauschbarkeit gegenüber dem darin genannten Stand der Technik zu verbessern, indem die Heizmittel in eine Trägerstruktur eingelassen sind, wobei die Trägerstruktur das Einsetzen einer Verbindungsplatte ermöglicht, welche wiederum mit dem Bearbeitungswerkzeug in Berührung ist, so dass die Wärme, welche induktiv in der Trägerstruktur erzeugt wird über die entsprechenden Kontaktflächen auf die Verbindungsplatte und anschließend auf das Werkzeug übertragen werden kann.

Des Weiteren ist aus der DE 42 02 883 A1 ein Verfahren zum Siegeln von Faltlappen einer Packung bekannt.

Die gattungsgemäße DE 1 160 564 beschreibt eine Vorrichtung zum Versiegeln eines Verpackungsschlauchs. Die Vorrichtung umfasst zwei endlos umlaufende Bänder, die zueinander parallel angeordnet sind, um einen Siegelbereich zu definieren. Auf einem der Bänder sind Druckorgane angeordnet, wobei auf dem anderen Band Widerlager vorgesehen sind. Die Druckorgane umfassen eine Druckplatte, die durch Induktionsspulen erwärmbar ist. Zusammen mit den Induktionsspulen sitzt die Druckplatte auf einer Lagerplatte. Nachteilig daran ist, dass durch die große Auflagefläche zwischen der Druckplatte und der Lagerplatte ein erhöhter Wärmeabfluss von der Druckplatte stattfinden kann. Dadurch ist es lediglich unter hohem Energieaufwand möglich, die Druckplatte auf einem konstanten Temperaturniveau zu halten.

### Aufgabe und Vorteile der Erfindung

Der Erfindung liegt die Aufgabe zu Grunde, ein Heizsystem für eine Verpackungsmaschine entsprechend des einleitend dargestellten Standes der Technik zu verbessern, das insbesondere den Energieverbrauch reduzieren kann.

Die Lösung dieser Aufgabe erfolgt ausgehend vom Oberbegriff des Anspruchs 1 durch dessen kennzeichnende Merkmale. In den abhängigen Ansprüchen sind zweckmäßige und vorteilhafte Weiterbildungen angegeben.

Demnach betrifft die vorliegende Erfindung eine Verpackungsmaschine zum Verpacken von mit Packgut zu füllenden, vorzugsweise muldenförmigen Verpackungen, wobei eine Heizung zum Beheizen eines zu einer Verpackung zu verformenden und/oder zu einer eine solche Verpackung verschließenden Versiegelung zu verformenden Rohmaterials vorgesehen ist, insbesondere jedoch zur Beheizung eines hierfür vorgesehenen Bearbeitungswerkzeugs. Die Verpackungsmaschine zeichnet sich erfindungsgemäß dadurch aus, dass die Heizung als Induktionsheizung ausgebildet ist.

Ein Bearbeitungswerkzeug ist als Heizplatte ausgebildet.

Als Induktionsheizung wird im Sinne der vorliegenden Erfindung eine Heizung verstanden, die mindestens eine elektrische Spule umfasst, mittels welcher ein Magnetfeld mit wechselnder Polarisation zur Erzeugung von Wärme in einem von dem Wechsel-Magnetfeld durchdrungenen elektrisch leitfähigem und/oder magnetische Eigenschaften aufweisenden Material erzeugt werden kann.

Eine Induktionsheizung hat den Vorteil, dass sie die zur Erwärmung eines das Verpackungs-Rohmaterial zu erwärmenden Anwärmelementes berührungs- und somit nahezu verlustlos direkt an den Ort erzeugt werden kann, an dem die Wärme benötigt wird.

Durch die Zuordnung der als Induktionsheizung ausgebildeten Heizung zu einem Bearbeitungswerkzeug kann die ihm zur Ver- bzw. Bearbeitung des betreffenden Verpackungs- bzw. Versiegelungsmaterials, in der Regel handelt es sich hierbei um Kunststofffolien, zugeführte Wärme sehr genau kontrolliert, also sowohl gesteuert als auch geregelt, werden. Das in üblicher Weise mit der zu verarbeitenden Folie in berührenden Kontakt zu bringende Bearbeitungswerkzeug kann so ohne einen wesentlichen Vorheizzyklus genau zu dem Zeitpunkt auf die für die Verarbeitung der Folie erforderliche Temperatur gebracht werden, an welchem diese zur Einleitung des entsprechenden Bearbeitungsschrittes erforderlich ist.

Ist die Heizung so angeordnet, dass im Bearbeitungswerkzeug mittels der Induktionsheizung induktiv erzeugte Wirbelströme erzeugbar sind, kann das Bearbeitungswerkzeug unmittelbar erwärmt werden. Es ist grundsätzlich daher nicht notwendig, erzeugte Wärme über Kontaktflächen oder Zwischenschichten zu leiten, um das Bearbeitungswerkzeug aufzuheizen. Somit können gegebenenfalls auch große Wärmeverluste vermieden werden. Des Weiteren kann die induktive Erwärmung in der Heizung mit der bzw. den entsprechenden Induktionsspulen selbst möglichst gering gehalten werden. Im Allgemeinen trägt die Erwärmung von Bauteilen der Verpackungsmaschine, mit Ausnahme der zu beheizenden Bearbeitungswerkzeugen, nicht nur zu Verlusten bei, sondern ist aus technischen und/oder sicherheitstechnischen Gründen vielfach unerwünscht und muss gegebenenfalls durch eine Kühlung reduziert werden. Ferner kann somit die Erwärmung in der Regel rasch im Werkzeug erzeugt werden, während jedoch, sobald ein beheiztes Werkzeug nicht mehr benötigt wird, eine Abkühlung auch relativ rasch erfolgen kann.

Auf eine Kühlung, insbesondere eine Kühlung mittels eines Kühlwassersystems, kann bei der erfindungsgemäßen Verpackungsmaschine gegebenenfalls sogar verzichtet werden. Die Induktionsheizung ermöglicht im Allgemeinen eine rasche Erwärmung des Bearbeitungswerkzeugs, welches in der Regel auch sehr schnell wieder abkühlen kann. Zusätzlich kann der Teil, in dem sich die Induktionsheizung bzw. die entsprechenden Induktionsspulen befindet bzw. befinden, als Wärmeabschottung des erwärmten Bearbeitungswerkzeugs nach außen hin dienen.

Durch die vergleichsweise geringe, weil in ihrer Temperatur sehr genau kontrollierbare Erhitzung des zur Verpackung zu verformenden Rohmaterials sowie auch der hierzu vorgesehenen Bearbeitungswerkzeuge können neben den oben bereits beschriebenen, folienartigen Rohmaterialien aber auch weitere Werkstoffe, wie Kunststoff-Verbundstoffe und/oder Kunststoff-Metall-Verbundstoffe verwendet werden.

Nach entsprechender Erwärmung des betreffenden Materials kann die Energiezufuhr an das betreffende Bearbeitungswerkzeug in energiesparender Weise wieder vollkommen unterbrochen werden.

In einer ersten Ausführungsform kann hierbei für ein betreffendes Bearbeitungswerkzeug eine einzige Induktionsheizung vorgesehen sein. Diese kann ihrerseits wiederum mit einer einzelnen Induktionsspule versehen sein, sie kann in einer abgewandelten Ausführungsform aber durchaus auch mehrere Induktionsspulen aufweisen.

Je nach Art und Größe der herzustellenden bzw. zu versiegelnden Verpackung können aber auch mehrere Bearbeitungswerkzeuge mittels einer einzelnen Induktionsheizung beheizt werden. Dies kann beispielsweise dann sinnvoll sein, wenn mehrere z.B. als Set zusammengefügte Bearbeitungswerkzeuge gleichzeitig mehrere Verpackungen herstellen bzw. Versiegeln.

In einer weiter abgewandelten Ausführungsform können aber auch zwei oder mehrere Bearbeitungswerkzeuge mittels einer oder mehrerer Induktionsheizung beheizbar ausgebildet sein. Auch hierzu gilt wiederum das eine oder mehrere dieser Heizungen mit einer oder mehreren Induktionsspulen bestückt sein kann bzw. können. Das Vorsehen mehrerer Induktionsheizungen kann den Vorteil haben, dass ganz gezielt an bestimmten, zu erwärmenden Bereichen eines oder mehrerer Bearbeitungswerkzeuge bestimmte, gegebenenfalls von anderen Bereichen der Bearbeitungswerkzeuge im Betrag und/oder im zeitlichen Verlauf abweichende Temperaturaufprägungen möglich sind. Dies kann insbesondere dann von Vorteil sein, wenn bestimmte Bereiche der zu verarbeitenden Folie, z.B. zur Erzielung einer speziell in diesem Bereich vorgesehenen, stärkeren Ausdünnung der Folie höher und/oder länger beheizt werden sollen als übrige Bereiche. Das Ziel dieser Vorgehensweise ist das Erreichen einer möglichst gleichmäßigen Wandstärke für die so geformte Verpackungsschale. Grundsätzlich können Bearbeitungwerkzeuge auch zwei- oder mehrteilig ausgebildet sein.

Zur Be- bzw. Verarbeitung der als Rohmaterial zugeführten Folie umfasst eine solche Verpackungsmaschine üblicherweise entlang des Verarbeitungsweges angeordnete, jeweils mit einer entsprechenden Anzahl von für den jeweiligen Bearbeitungsschritt erforderlichen Bearbeitungswerkzeugen ausgestattete Bearbeitungsstationen. Beispielhaft seien hier als Arbeitsstationen eine sogenannte Form- bzw. Tiefziehstation mit einer gegebenenfalls vorgeschalteten Vorheizstation zum Vorwärmen von gegebenenfalls vor der Verformung der Folie kurzfristig nicht ausreichend erwärmbaren Folien genannt, oder eine Siegelstation zur Versiegelung einer mit zu verpackendem Packgut befüllten und mit einer sogenannten Deckelfolie versehenen, zu einer fertigen Packung zu formenden Verpackung.

Je nach betreffendem Bearbeitungsschritt können die Bearbeitungswerkzeuge dann als Heizplatte, als Formwerkzeug und/oder als Siegelwerkzeug ausgebildet sein. Abhängig vom jeweiligen Anwendungsfall kann es einmal vorteilhaft sein, dass das betreffende Bearbeitungswerkzeug nur eine Funktion inne hat, wie z.B. Vorheizen oder Formen oder Siegeln. Eine solche Aufteilung der einzelnen Werkzeuge kann beispielsweise bei relativ einfachen Verpackungsformen von Vorteil sein.

Bei dem gegenüber gegebenenfalls schwieriger zur formenden und/oder zu versiegelnden Verpackungsformen kann es gegebenenfalls vorteilhaft sein, wenn das jeweilige Bearbeitungswerkzeug multifunktional zum Einsatz kommt. Möglich wäre hierbei z.B. sowohl ein Vorwärmen der zu verarbeitenden Folie in einem ersten z.B. der Verformung vorgeschalteten Vorwärmschritt, sowie ein Beibehalten der Beheizung zumindest bestimmter Folienbereiche während deren Verformung, so dass das Heizelement gleichzeitig auch als Formwerkzeug fungieren kann. Entsprechendes gilt für den Siegelprozess.

Es kann auch vorteilhaft sein, zwischen der Heizung, welche die Induktionsspulen umfasst, und dem Bearbeitungswerkzeug einen Wärme isolierenden Bereich vorzusehen. Dieser kann zusätzlich verhindern oder zumindest eindämmen, dass das erwärmte Bearbeitungswerkzeug Wärmeenergie auf die Heizung mit den Induktionsspulen überträgt und so zu Verlusten bzw. gegebenenfalls einer zusätzlichen Aufwärmung der Spulen führt.

Der Wärme isolierende Bereich kann beispielsweise bei einer Erfindungsvariante als Luftspalt ausgebildet sein.

Die Halterung des Bearbeitungswerkzeugs kann z.B. über Bolzen erfolgen, welche in vorteilhafter Weise aus einem Wärme isolierenden Material gefertigt sein können. Die Heizung kann z.B. ein Gehäuse umfassen. Die Bolzen können auf der Seite der Heizung z.B. an einem derartigen Gehäuse angebracht sein. Auch das Gehäuse kann aus einem Material bestehen, welches sich möglichst wenig zu einer induktiven Erwärmung eignet, also beispielsweise aus einem Nichtleiter besteht, wenig oder keine ferromagnetischen Anteile aufweist usw. Ferner kann dieses Gehäuse auch aus einem Wärme isolierenden Material gefertigt sein.

Grundsätzlich ist es auch möglich, den Wärme isolierenden Bereich aus einem anderen Material, insbesondere einem Festkörper wie z.B. einem Wärme isolierenden Kunststoff auszubilden.

Durch das Vorsehen mehrerer Induktionsspulen in der Heizung kann eine demgegenüber verbesserte flächige Wärmewirkung durch die flächige Verteilung der einzelnen Wechselmagnetfelder erreicht werden. Hierdurch ist es möglich, ganz gezielt im Wesentlichen nur jene Bereiche des betreffenden Anwärmelementes und/oder Form- und/oder Siegelwerkzeugs zu erwärmen, durch welche das Verpackungs-Rohmaterial im betreffenden Form- und/oder Siegelprozess erwärmt und/oder bearbeitet werden soll.

Mit einer matrixförmigen Anordnung kann beispielsweise eine großflächige, im Wesentlichen gleichmäßige Erwärmung des betreffenden, hierdurch mit Energie versorgten Anwärmelementes und/oder Form- und/oder Siegelwerkzeugs erreicht werden.

Durch eine Variierbarkeit der Induktionsspulen in ihrer Position und/oder ihrer Anzahl kann die erfindungsgemäße Induktionsheizung in weiter vorteilhafter Weise an wechselnde Produktionsforderungen angepasst werden, wie sie beispielsweise durch Format- und/oder Rohmaterialwechsel bedingt sein können. In besonders vorteilhafter Weise betrifft die Variierbarkeit sowohl die lokale Anordnung wie auch die Anzahl und/oder die Intensität und/oder die Ausrichtung der einzelnen Induktionsspulen.

Eine Änderung in der Intensität des von der Induktionsspule erzeugten Wechselfeldes ist insbesondere auch durch die Ausbildung der Induktionsspulen als Wechselelemente einfach zu realisieren. Sofern die räumlichen Abmessungen von in ihrer Intensität unterschiedlichen Induktionsspulen im Wesentlichen so zueinander ähnlich sind, dass es keine Rolle spielt, an welcher Position sie in einem für die Aufnahme der jeweiligen Induktionsspulen vorgesehenen Gehäuse einnehmen, können sie auch problemlos in oben angegebenen Sinne variiert und/oder getauscht werden.

In einer besonders bevorzugten Ausführungsform ist es vorgesehen, dass die Position und/oder Orientierung der Induktionsspulen so gewählt ist, dass hierdurch im Wesentlichen nur ein oder mehrere bestimmte Bereiche des davon zu erwärmenden Anwärmelementes und/oder Form- und/oder Siegelwerkzeugs erwärmt wird bzw. werden. Dies kann einerseits bei der Vorwärmung des üblicherweise folienartigen Rohmaterials erfolgen, so dass für den jeweiligen Bearbeitungsprozess kritische Verformbereiche zur Erzielung einer besseren, insbesondere gleichmäßigen Dickenreduzierung gezielter vorgewärmt werden können. Damit ist es beispielsweise möglich, üblicherweise beim Tiefziehen sich rascher abkühlende Bereiche, wie z.B. die Bereiche der Seitenwände einer zu formenden Verpackungsmulde ggf. etwas höher und/oder insbesondere auch länger mit Wärme zu versorgen als beispielsweise Bereiche in Kanten und Ecken. Damit kann in vorteilhafter Weise eine andernfalls vergleichsweise stärkeren Ausdünnung der Materialschichten in Kanten- und Eckbereichen aufgrund erstarrter und somit nicht mehr verformbarer Flächenbereiche an den Seitenwänden und/oder dem Boden des zu formenden Verpackungsbehältnisses erreicht werden.

In einer möglichen Ausführungsform können hierzu Oberflächenbereiche von Tiefziehformen in einer im Wesentlichen nur geringen Schichttiefe in den Bereichen erwärmt werden, an welchem sich die tiefzuziehende Folie zur Ausbildung des herzustellenden Verpackungsbehältnisses anlegt. Die Zufuhr der Wärme kann unmittelbar nach Vollendung des Verformvorgangs beendet werden, so dass die restlichen noch kühlen oder sogar kalten Materialanteile des Formwerkzeugs die kurzzeitig durch die Induktionsheizung erwärmten Schichtbereiche und insbesondere die daran anliegende, tiefgezogene Folie wieder rasch abkühlen und formstabil aushärten. Neben der Einflussnahme auf die Position und/oder Anzahl der Induktionsspulen sowie ggf. deren Ausrichtung ist auch die Einflussnahme auf die Betriebsparameter der Induktionsspule wie z.B. Frequenz und/oder Spannung und/oder die Stromstärke und/oder das Vorsehen von die Richtung und/oder die Intensität des Magnetfeldes vorteilhaft beeinflussender Mittel wie z.B. die Anordnung ferromagnetischer Elemente möglich.

Je nach gewünschter Wärmezufuhr an das zu prozessierende Verpackungsmaterial ist somit eine Prozessoptimierung durch die Einflussmöglichkeit auf verschiedene Parameter möglich, wie z.B. die Menge der in einem bestimmten Bereich eines Anwärmelementes, insbesondere aber eines Formwerkzeugs zur Verformung des Materials eingetragenen Wärmeenergie, beispielsweise über die abhängig von der erhitzten Schichttiefe erwärmte Masse des Formwerkzeugs und/oder über den zeitlichen Verlauf des Wärmeeintrags in einen entsprechenden Bereich des Werkzeugs.

Eine erfindungsgemäß aufgebaute Verpackungsmaschine kann somit mit einem vergleichsweise massiv reduzierten, heizungsbezogenen Energiebedarf betrieben werden. Ein weiterer wesentlicher Vorteil liegt im Wegfall eines bisher üblicherweise erforderlichen Kühlsystems. Dies wirkt sich sowohl hinsichtlich der Anschaffungs- und Betriebsaufwendungen als auch insbesondere hinsichtlich eines hierdurch nicht mehr erforderlichen Raumbedarfs positiv aus. Auch die Verwendung von vergleichsweise kostengünstigerer Rohmaterialien, wie die oben bereits erwähnten Kunststoff-Verbundstoffe und/oder Kunststoff-Metall-Verbundstoffe, sind positive Auswirkungen der vorliegenden Erfindung.

Auch eine Temperaturregelung ist entbehrlich, da die betreffenden Parameter abhängig von der verwendeten Folie und von der jeweils herzustellenden Verpackung einmal ermittelt und für den Zugriff bei einem entsprechenden Formvorgang bereitgehalten werden können. Die Anwärmelemente und/oder Form- und/oder Siegelwerkzeuge werden dann immer entsprechend mit der gleichen Energiemenge versorgt. Hierdurch ist ein stabiler Prozessverlauf möglich.

Gegebenenfalls kann für den Anlaufbetrieb der Verpackungsmaschine eine Faktorisierung einzelner Parameter vorgesehen werden, wobei auch hierbei für jeweilige Konstellationen an Verpackungs-Rohmaterial, Anzahl und/oder Art der Anwärmelemente und/oder der Form- und/oder Siegelwerkzeuge und/oder einer auf die Vorrichtung bezogenen Temperatur eine entsprechende Wertetabelle hinterlegt werden kann, z.B. in einem vorzugsweise der Maschinensteuerung zugeordneten Speicher.

Durch das Vorsehen einer Kontrolleinheit zur einzelnen und/oder gruppenweise Ansteuerung von Induktionsspulen ist eine ganz gezielte Einflussnahme auf die Menge und/oder den zeitlichen Verlauf der durch die jeweilige Induktionsspule in den betreffenden Prozessschritt eingetragenen Wärmeenergie möglich. Hierdurch können in besonders vorteilhafter Weise z.B. bei mechanisch unverändertem Aufbau auch verschiedene Verpackungs-Rohmaterialien mit ggf. unterschiedlichen Bearbeitungsanforderungen verarbeitet werden. Die Kontrolleinheit kann also zur Variierung der Steuerparameter für die Induktionsspulen ausgelegt sein.

Die mechanische Realisierung kann in einer bevorzugten Ausführungsform dabei so vorgesehen sein, dass die Induktionsspulen je nach Ausführungsform des von ihnen zu erwärmenden Anwärmelementes bzw. Form- und/oder Siegelwerkzeugs und/oder einem hierzu komplementären Element bzw. Werkzeugs direkt in diese und/oder an diesem angeordnet ist bzw. sind. **Die Induktionsspulen können demnach in und/oder an einem Bearbeitungswerkzeug bzw. in und/oder an einem zum Bearbeitungswerkzeug komplementären Werkzeug angeordnet sind.**

Das Vorwärmelement kann in einer möglichen Ausführungsform z.B. als zum Erhitzen.der zu verformenden Rohfolie direkt mit dieser in Berührung kommenden Heizplatte mit rückseitig entsprechend obiger Darlegungen flächig verteilt angeordneten Induktionsspulen ausgebildet sein. Um die Folie mit der entsprechenden Wärmeenergie zu beaufschlagen, kann mit der erfindungsgemäßen Heizplatte der Energieeintrag so prozessoptimierend erfolgen, dass der Energieeintrag erst dann durch induktives Aufheizen der Heizplatte erfolgt, wenn ein nachfolgender Tiefziehprozess auch definitiv stattfinden kann. Während den Maschinentakt unterbrechenden Stillstandszeiten ist in den primären Energieverbrauch reduzierender Weise kein vorwärmendes Beheizen der Heizplatte erforderlich. In weiter vorteilhafter Weise wird hierdurch auch ein bisher in solchen Fällen ggf. auftretendes, unzulässiges Überhitzen der Folie vermieden.

Diese Vorteile gelten sowohl für das primäre Anwärmelement, welches so am Formwerkzeug angeordnet ist, dass es dem Tiefziehvorgang unmittelbar vorgeschaltet ist, als auch für ein ggf. zusätzlich ausgebildetes zweites Anwärmelement, welches z.B. auch als "Vorwärmelement" bezeichnet werden kann und in Verarbeitungsrichtung der Folienbahn dem primären Anwärmelement stromaufwärts vorgeschaltet ist.

Bei besonderen Ausführungsformen kann ein solches Anwärmelement auch zwei Heizplatten aufweisen, welche sich gegenüberliegend und die zu erwärmende Folie sandwichartig umschließend angeordnet sind. **Zwei in Bezug auf das zur Verbackung zu verarbeitende Material sandwichartig angeordnete Heizplatten können vorgesehen sein.**

In einer möglichen Ausführungsform kann hierbei für jede der beiden Platten eine eigene Induktionsheizung vorgesehen sein. In einer besonders bevorzugten Ausführungsform ist jedoch nur eine Induktionsheizung vorgesehen. Diese befindet sich an der Rückseite einer der beiden Heizplatten und erwärmt sowohl die ihr direkt benachbarte Heizplatte als auch die auf der anderen Seite der Folie.

In einer weiter abgewandelten Ausführungsform kann die Heizplatte auch als elastisch verformbare Platte ausgebildet sein, die z.B. zur Unterstützung der Bewegung des von ihr erwärmten Bereichs der zur Verpackung zu verformenden Folie während des Tiefziehvorgangs hin zum Formwerkzeug unterstützen kann, insbesondere bevorzugt unter Verlängerung des zeitlichen Verlaufs von Wärmeabgabe von der Heizplatte auf die zu verformende Folie. Hierdurch kann insbesondere in den Folienbereichen, die aufgrund einer Anlage am Formwerkzeug als erstes abkühlen eine verlängerte Beibehaltung der für die Fliesseigenschaft der Folie erforderliche Temperatur erreicht werden. Dies gilt insbesondere für die großflächigen Bereiche wie Wand und Bodenfläche des zu formenden, mulden- bzw. schalenförmigen Verpackungsbehältnisses.

In einer weiter bevorzugten Ausführungsform kann die induktive Heizung auch in einem stempelförmig ausgebildeten Formwerkzeug untergebracht sein. Hierdurch kann insbesondere bei schwierigen Konturen eine vergleichsweise lange Wärmeübertragung auf die zu verformende Folie dadurch realisiert werden, dass das beheizte, stempelförmige Werkzeug ggf. bis zum Erstarren der geformten Folie an diese anliegt. Der Zeitpunkt des Abschaltens der induktiven Heizung kann hierbei je nach Ausführungsform variieren. Insbesondere ist es hierbei auch möglich, bestimmte kritische Bereiche der zu verformenden Folie länger zu beheizen als andere.

Bei einer Ausführungsform, bei der die mit der zu verarbeitenden Folie in Berührung kommende Bereiche des stempelförmigen Formwerkzeuges aus einem im Wesentlichen nicht leitenden bzw. nicht wärmeleitenden Material bestehen, ist beispielsweise eine induktive Erwärmung eines komplementären, ggf. schalenförmigen Formwerkzeuges während des Einfahrens des Stempels in dieses Formwerkzeug möglich. Hierdurch kann das komplementäre, schalenförmige Formwerkzeug in seinen äußeren, der zu verformenden Folie zugewandten Schichtbereichen soweit erwärmt werden, dass ein Absinken der Folientemperatur unter die Erstarrungstemperatur hinausgezogen und somit ein positiver Einfluss auf eine gleichmäßige Schichtdickenreduzierung der zu verformenden Folie beigetragen werden kann.

Alternativ oder zusätzlich kann in dem stempelförmig ausgebildeten Formwerkzeug in den Bereichen, in denen vergleichsweise geringe Verformungen des zur Verpackung zu verformenden Materials zur Anlage kommen, ferromagnetische Materialanteile eingebracht sein. Hierdurch ist eine zusätzliche Erwärmung dieser Flächenbereiche durch die Wirkung der Induktionsheizung im oben dargelegten Sinne möglich, so dass aus den späteren, großflächigen Wandbereichen Material in die kritischen Kanten- und Eckbereiche der zu formenden Verpackung fließen kann, um dort eine kritische Materialausdünnung zu vermeiden.

In besonders bevorzugten Ausführungsformen sind das Anwärmelement und/oder das Form- und/oder Siegelwerkzeug aus ferromagnetischem Material gefertigt oder zumindest mit solchem versetzt. Insbesondere vorteilhaft können hierbei korrosionsbeständige, ferromagnetische Materialien Anwendung finden. Hierdurch ist ein problemloser Einsatz der Verpackungsmaschine sowohl im Lebensmittel- als auch im medizintechnischen Bereich möglich. Der mit dem zur Verpackung zu verarbeitenden Material in Berührung kommende Bereich des stempelförmigen Formwerkzeuges kann in den Bereichen, in denen vergleichsweise geringere Verformungen des zur Verpackung zu verformenden Materials zur Anlage kommen, induktiv erwärmbare Materialteile aufweisen.

Grundsätzlich möglich ist aber auch die Verwendung von aluminiumhaltigen Materialien unter Inkaufnahme einer entsprechend schlechteren Energieeffizienz aufgrund der schlechteren Erwärmungseigenschaft des Aluminiums im Vergleich zu ferromagnetischen Materialien möglich.

Ferner ist as denkbar, das Bearbeitungswerkzeug wenigstens bereichsweise zu beschichten.

Bei einer weiteren Ausführungsvariante kann ein Formwerkzeug auch muldenförmig ausgebildet sein.

### Ausführungsbeispiel:

Es zeigen die
- Figur 1: eine schematische, perspektivische Darstellung einer möglichen Ausführungsform einer Verpackungsmaschine, die
- Figuren 2 - 4: eine erfindungsgemäße Induktionsheizung für ein Anwärmelement zur Erwärmung einer zu einer muldenförmigen Verpackung zu verformenden Folie in unterschiedlichen Darstellungen und Ausführungsformen,
- Figur 5: schematisch und beispielhaft ein Formwerkzeug in Schnittdarstellung und
- Figur 6: schematisch und beispielhaft ein Siegelwerkzeug in Draufsicht.

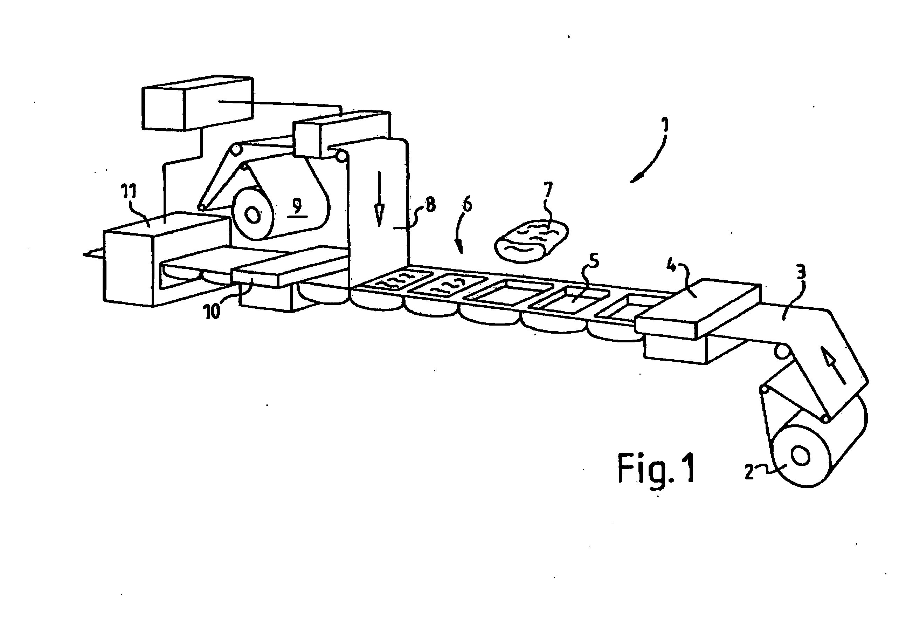

Die Verpackungsmaschine 1 nach Figur 1 stellt eine sogenannte Tiefziehmaschine dar, die aus einer Folienrolle 2 die sogenannte Unterbahn oder auch Muldenfolie 3 abzieht. Die Muldenfolie 3 wird in einem Formwerkzeug 4 unter Wärme und gegebenenfalls auch Druckeinwirkung, insbesondere bevorzugt auch unter Vakuumbeaufschlagung zu Packungsmulden 5 geformt. Die Packungsmulden 5 werden in einer Füllstrecke 6 manuell oder automatisch mit Packgut 7 gefüllt. Eine Deckelfolie 8 wird von einer Vorratsrolle 9 abgezogen und als Deckel auf die Packungsmulden 5 aufgelegt. In einem Siegelwerkzeug 10 wird die Deckfolie 8 mit der Packungsmulde 5 verbunden und versiegelt. In einer Schneideinheit 11 werden einzelne, im vorangehenden Herstellungsprozess zusammenhängend gefertigten Packungen zu Einzelpackungen abgetrennt.

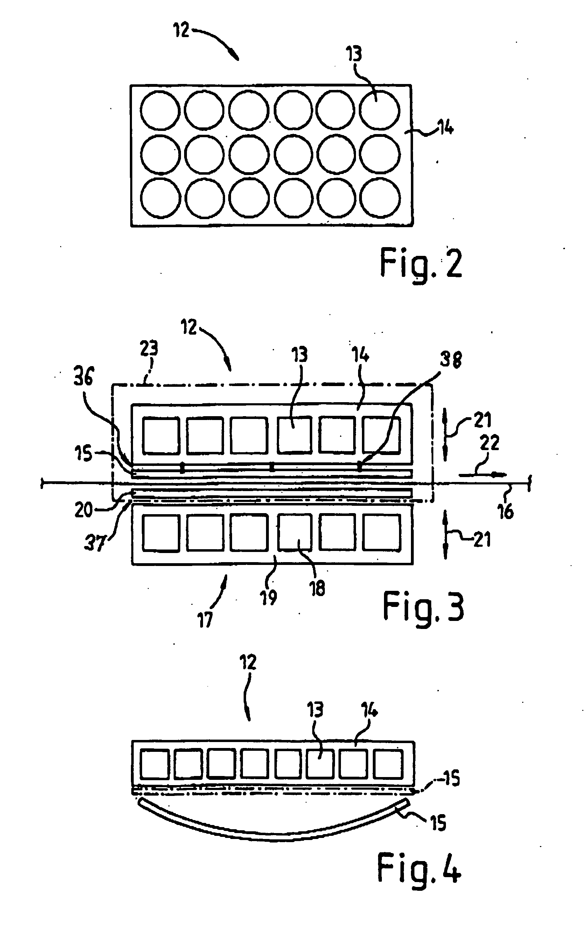

Die Figur 2 zeigt schematisch eine Draufsicht auf eine Heizung, z.B. für ein Anwärmelement zum Vorwärmen einer zu einer Packungsmulde zu verformenden Folie. Erfindungsgemäß umfasst diese Heizung 12 in einem Gehäuse 14 matrixförmig angeordnete, elektrische Spulen 13 als erste wesentliche Elemente der erfindungsgemäß als Induktionsheizung ausgebildeten Heizung 12. Durch diese flächige Aufteilung der Spulen 13 kann ein verhältnismäßig flächig ausgebildetes, elektromagnetisches Feld zur Beheizung der, entsprechend der Darstellung der Figur 3, hierzu stirnseitig angeordneten, vorzugsweise ferromagnetische Metallanteile aufweisenden Heizplatte 15 erzeugt werden.

Die Gehäuse 14 und 19 der jeweiligen Heizungen 12 und 17 sind von den entsprechenden Heizplatten 15 und 20 beabstandet. Diese Zwischenbereiche 36, 37 zwischen den jeweiligen Gehäusen 14, 19 und den entsprechenden Heizplatten 15, 20 werden zur Wärmeisolation durch Luftspalte gebildet. Die Heizplatte 15 ist über Bolzen 38 an dem entsprechenden Gehäuse 14 gehaltert.

Üblicherweise ist die Heizplatte 15 zur Beheizung der nach dem Heizvorgang zu einer Verpackungsmulde zu verformenden Folie in direkt berührendem Kontakt mit dieser. Damit wird der Folie genau die Temperatur zugeführt, auf die auch die Heizplatte aufgeheizt wird. Um die Folie 16 während ihrer Bewegungen in Transportrichtung entsprechend des Pfeiles 22 nicht durch Reib- bzw. Schleifkontakt zu beschädigen, kann die Heizung 12 zusammen mit der Heizplatte 15 entsprechend der Pfeilrichtung 21 zum Einleiten des Heizvorgangs zur Folie hin und anschließend wieder von der Folie wegbewegt werden.

Durch die Variierung der Betriebsparameter der elektrischen Spulen 13, wie Frequenz und/oder Spannung kann die vom davon resultierenden magnetischen Feld in der Heizplatte 15 erzeugten Wärme einerseits sehr rasch und andererseits sowohl in ihrer Tiefenwirkung als auch in ihrer Temperatur sehr genau gesteuert erzeugt werden. In weiter vorteilhafter Weise kann die Masse der Heizplatte 15 sehr gering gehalten werden, was sich weiter vorteilhaft sowohl auf die Erzeugung als auch auf die Abgabe der Temperatur in einem vergleichsweise engen Temperaturband aufgrund der mit der geringen Masse verbundenen geringen Temperaturschwingung vorteilhaft auswirkt.

Um die Folie 16 von beiden Seiten gleichmäßig erwärmen zu können, ist hier beispielhaft für eine weitere Ausführungsform an der Unterseite der Folie eine weitere Heizung 17 mit elektrischen Spulen 18 in einem Gehäuse 19 und mit einer Heizplatte 20 dargestellt. Auch diese kann entsprechend der Pfeilrichtungen 21 zur Beheizung der Folie 16 an diese heran- und anschließend von ihr weggefahren werden. Die Folie kann aber auch zwischen zwei Heizplatten hindurchgeführt werden, von denen wenigstens eine vorzugsweise aber beide in ihrer Position fest angeordnet sind, so dass ihr Abstand zur Folie bzw. dem zur Verpackung zu verformenden Rohmaterial fest vorgebbar ist.

In einer besonders bevorzugten Ausführungsform ist es vorgesehen, dass sowohl eine auf der einen Seite der Folie 16 angeordnete Heizplatte 15 als auch eine an der gegenüberliegenden Seite der Folie angeordnete Heizplatte 20 durch elektrische Spulen 13, entsprechend der durch den gestrichelten Rahmen 23 zusammengefassten, sandwichartigen Heizung, induktiv beheizt werden.

In der Figur 4 ist eine weiter abgewandelte Ausführungsform der Heizung 12 darstellt, bei der die Heizplatte 15 als flexible, elastisch verformbare Heizplatte ausgebildet ist. Eine solche Heizung 12 kann beispielsweise in Zusammenwirkung mit einem hier nicht dargestellten, schalenförmigen Formwerkzeug zur Verformung der von der Heizplatte 15 beheizten Folie vorgesehen werden. Wie oben beschrieben, wird die Heizplatte 15 zuerst durch das von den elektrischen Spulen 13 in sie induzierte elektromagnetische Feld in der gestrichelt dargestellten Position erhitzt, um die an ihr anliegende Folie entsprechend zu erwärmen. Nach ausreichender Erwärmung der Folie kann die Heizplatte 15 z.B. in einer Art Schnappbewegung die erwärmte Folie in Richtung des sie zur Verformung aufnehmenden Formwerkzeuges drücken. Insbesondere vorteilhaft bleibt hierbei die noch Wärmeenergie aufweisende Heizplatte 15 weiterhin in Anlage an der Folie, um diese möglichst lange in dem Temperaturbereich zu halten, in welchem sie fließfähig ist. Hierdurch kann in besonders vorteilhafter Weise aus den sich ansonsten, wenn überhaupt, nur gering verformenden, häufig großflächigen Bereichen Material in Richtung jene Formbereiche verzogen werden, in denen vergleichsweise große Verformungen und damit einhergehend eine große Materialausdünnung erfolgt, wie z.B. in Ecken und Kanten.

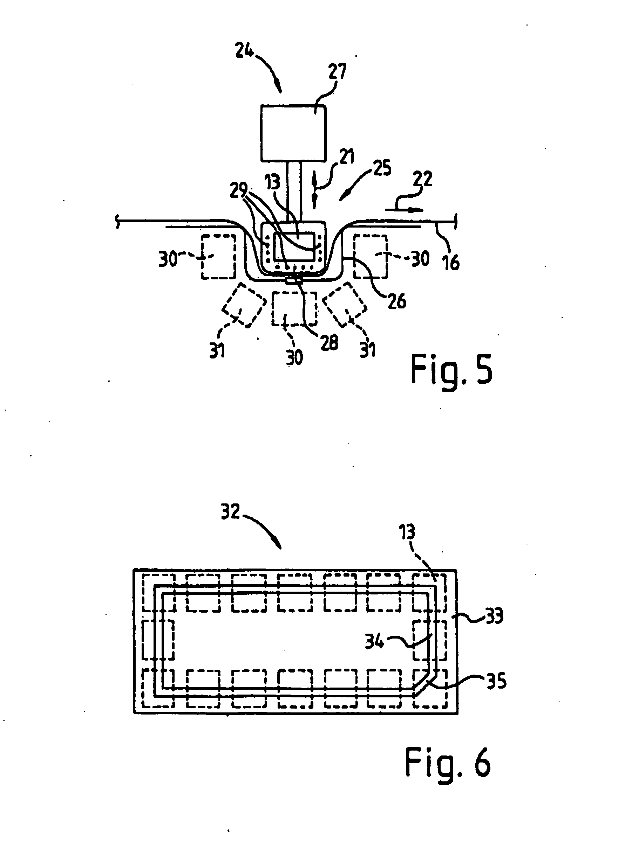

Die Figur 5 zeigt wiederum schematisch und beispielhaft eine Schnittdarstellung einer Formvorrichtung 24. Diese umfasst ein stempelförmiges Formwerkzeug 25 und ein schalenförmiges Formwerkzeug 26 zur Herstellung eines schalen- bzw. muldenförmigen Verpackungsbehältnisses aus der hierdurch verformten Folie 16.

In dieser Ausführungsform ist im stempelförmigen Formwerkzeug 25 wiederum eine elektrische Spule 13 angeordnet. Hierdurch kann ein Magnetfeld erzeugt werden, welches z.B. beim Eindrücken der zuvor vorgewärmten Folie 16 in das schalenförmige Werkzeug 26 eine Erwärmung der vom erzeugten Magnetfeld überstrichenen Wandbereiche des schalenförmigen Formwerkzeugs 26 zumindest in dessen Außenschichten bewirken kann. Hierdurch ist wiederum ein Hinauszögern einer Temperaturabsenkung der Folie unter den Temperaturbereich möglich, in welchem sie fließfähig bleibt. Ohne eine solche Erwärmung würde die Folie an der andernfalls kalten Oberfläche des schalenförmigen Formwerkzeugs 26 sofort erkalten und erstarren.

Ein weiterer Vorteil der Anordnung einer elektrischen Spule 13 in diesem vom Antrieb 27 betätigten, stempelförmigen Formwerkzeug 25 liegt in der induktiven Erwärmung eines wie hier beispielhaft im Bodenbereich des schalenförmigen Formwerkzeuges 26 angeordnet dargestellten Klischees 28.
Hierdurch kann die Folie im gleichen Sinne wie oben dargelegt vergleichsweise länger in ihrem fliessfähigen Zustand durch Vermeidung eines ansonsten erfolgenden Temperaturabzugs zu gehalten werden.

Üblicherweise ist das stempelförmige Formwerkzeug 25 aus einem nicht leitenden Material hergestellt. Um der hier zu verformenden Folie 16 zur Einleitung und während des Verformvorgangs zusätzlich Wärmeenergie aufbringen zu können, kann das stempelförmige Formwerkzeug 25 mit Einlagerungen 29 induktiv erwärmbaren, vorzugsweise ferromagnetischen Materialien versehen sein, um so die betreffenden Wandungsbereiche des stempelförmigen Formwerkzeugs 25 mittels dem von der Spule 13 erzeugten elektromagnetischen Feld zusätzlich zu erwärmen. Die induktiv erwärmbaren Materialien können ggf. auch so angeordnet sein, dass sie in direkt berührendem Kontakt mit der Folie 16 zur besseren Wärmeübertragung gelangen können. In besonders bevorzugter Weise werden hierbei wiederum solche Flächenbereiche erwärmt, in denen ein Hinauszögern der Folienerstarrung gewünscht wird.

Eine weitere Möglichkeit einer induktiven Erwärmung des schalenförmigen Formwerkzeugs 26 besteht durch eine Anordnung von elektrischen Spulen 30 an ihrer der zu verformenden Folie abgewandten Seite. Um auch die Eck- und/oder Kantenbereiche des Formwerkzeugs 26 möglichst gleichmäßig erwärmen zu können, können in diesen Bereichen zusätzliche Spulen 31 vorgesehen sein. Durch eine individuelle Ansteuerung der einzelnen Spulen kann eine weitere Verbesserung auf die Temperaturführung bei der Verformung der Folie erzielt werden. Dies gilt grundsätzlich für alle hier beschriebenen Ausführungsformen.

Die Figur 6 zeigt wiederum schematisch und beispielhaft eine Draufsicht auf ein Siegelwerkzeug 32, wie es zur Versiegelung einer mit Packgut 7 befüllten Packungsmulde 5 entsprechend der Darstellung in der Figur 1 an der Siegelstation 10 vorgesehen ist. Das Siegelwerkzeug 32 weist einen aus einem induktiv erwärmbaren, vorzugsweise ferromagnetischen metallgefertigten Siegelkontur 34 auf. Das Gehäuse 33 kann im Grund aus jedem beliebig geeigneten Material gefertigt sein. Der Energieeintrag zur Erzeugung einer Wärme im Siegelkontur 34 erfolgt auch hier, wie bei den oben beschriebenen Ausführungsformen, durch Aktivierung elektrischer Spulen 13. Diese sind hier beispielhaft gestrichelt im Gehäuse 33 ringförmig hinter dem Siegelkontur 34 angeordnet. Die hier beispielhaft, im Wesentlichen rechteckförmig dargestellte Siegelkontur 34 weist an einer Ecke zur Ausbildung einer sogenannten "Aufreißecke" an der Verpackung eine Abschrägung 35 auf.

Für alle hier induktiv beheizten Heiz- bzw. Formelemente gilt in vorteilhafter Weise, dass sie aus einem vergleichsweise dünnen und damit mit geringer Masse behafteten, vorzugsweise ferromagnetischem Material hergestellt werden können. Hierdurch ergeben sich einerseits Einsparungen in der für die Erwärmung der betreffenden Werkzeuge benötigten Energie. Durch die induktive Beheizung ist andererseits auch eine sehr genaue Temperatureinflussnahme auf den Verarbeitungsprozess der zur Verpackung zu verformenden Folie möglich, und zwar in weiter vorteilhafter Weise sogar ohne jegliches Kühlsystem.

### Bezugszeichenliste:

- 1: Verpackungsmaschine
- 2: Folienrolle
- 3: Muldenfolie
- 4: Formvorrichtung
- 5: Packungsmulden
- 6: Füllstrecke
- 7: Packgut
- 8: Deckelfolie
- 9: Folienrolle
- 10: Siegelvorrichtung
- 11: Schneideinheit
- 12: Heizung
- 13: Elektrische Spule
- 14: Gehäuse
- 15: Heizplatte
- 16: Folie
- 17: Heizung
- 18: Elektrische Spule
- 19: Gehäuse
- 20: Heizplatte
- 21: Pfeil
- 22: Pfeil
- 23: Sandwich-Heizung
- 24: Formvorrichtung
- 25: Stempelförmiges Formwerkzeug
- 26: Schalenförmiges Formwerkzeug
- 27: Antrieb
- 28: Klischee
- 29: Materialeinlagerung
- 30: Elektrische Spule
- 31: Elektrische Spule
- 32: Siegelwerkzeug
- 33: Gehäuse
- 34: Siegelkontur
- 35: Aufreissecke
- 36: Luftspalt
- 37: Luftspalt
- 38: Bolzen

## Patentansprüche

1. Verpackungsmaschine (1) zum Verpacken von mit Packgut (7) zu füllenden, vorzugsweise muldenförmigen Verpackungen, wobei eine Heizung (12) vorgesehen ist, die als Induktionsheizung ausgebildet ist, welche einem Bearbeitungswerkzeug zugeordnet ist und wobei die Induktionsheizung so angeordnet ist, dass im Bearbeitungswerkzeug mittels der Induktionsheizung induktiv erzeugte Wirbelströme zur unmittelbaren Erwärmung des Bearbeitungswerkzeugs erzeugbar sind, wobei das Bearbeitungswerkzeug als Heizplatte ausgebildet ist und wenigstens bereichsweise ein elektrisch leitfähiges und/oder magnetische Eigenschaften aufweisendes Material aufweist,
**dadurch gekennzeichnet,**
**dass** die Heizplatte durch wärmeisolierende Bolzen (38) mit der Heizung (12) verbunden ist.

2. Verpackungsmaschine nach Anspruch 1, **dadurch gekennzeichnet, dass** das Bearbeitungswerkzeug mittels einer Induktionsheizung beheizbar ist.

3. Verpackungsmaschine nach Anspruch 1, **dadurch gekennzeichnet, dass** zwei oder mehrere Bearbeitungswerkzeuge mittels einer oder mehreren Induktionsheizungen beheizbar sind.

4. Verpackungsmaschine nach einem der vorangehenden Ansprüche, **dadurch gekennzeichnet**, das wenigstens abschnittsweise zwischen der Heizung (12) und dem Bearbeitungswerkzeug ein wärmeisolierender Bereich (36, 37) angeordnet ist.

5. Verpackungsmaschine nach Anspruch 4, **dadurch gekennzeichnet, dass** der wärmeisolierende Bereich (36, 37) als Luftspalt ausgebildet ist.

6. Verpackungsmaschine nach Anspruch 4, **dadurch gekennzeichnet, dass** der wärmeisolierende Bereich (36, 37) aus einem wärmeisolierenden Material, wie beispielsweise aus einem wärmeisolierenden Kunststoff, gefertigt ist.

7. Verpackungsmaschine nach einem der vorangehenden Ansprüche, **dadurch gekennzeichnet, dass** die Heizung (12) mehrere Induktionsspulen (13) umfasst.

8. Verpackungsmaschine nach Anspruch 7, **dadurch gekennzeichnet, dass** die Induktionsspulen (13) matrixförmig angeordnet sind.

9. Verpackungsmaschine nach Anspruch 7 oder 8, **dadurch gekennzeichnet, dass** die Position und/oder Anzahl der Induktionsspulen (13) variierbar ist.

10. Verpackungsmaschine nach einem der Ansprüche 7 bis 9, **dadurch gekennzeichnet, dass** die Induktionsspulen (13) als Wechselelemente ausgebildet sind.

11. Verpackungsmaschine nach einem der Ansprüche 7 bis 10, **dadurch gekennzeichnet, dass** die Position und/oder Orientierung der Induktionsspulen (13) so gewählt ist, dass hierdurch im Wesentlichen nur ein oder mehrere bestimmte Bereiche der davon zu erwärmenden Heizplatte (12) erwärmt werden.

12. Verpackungsmaschine nach einem der Ansprüche 7 bis 11, **dadurch gekennzeichnet, dass** die Steuerparameter zum Betrieb der Induktionsspulen (13) so vorgebbar sind, dass hierdurch im Wesentlichen nur eine bestimmte Schichttiefe der zu erwärmenden Heizplatte (12) erwärmt werden.

## Claims

1. A packaging machine (1) for the packaging of preferably tray-shaped packagings to be filled with goods (7) to be packaged, wherein a heating (12) is provided which is in the form of induction heating which is associated with a processing tool and wherein the induction heating is arranged so that inductively generated eddy currents are generated by means of the induction heating in the processing tool for the direct heating of the processing tool, wherein the processing tool is in the form of a heating plate and at least in zones has a material possessing electrically conductive and/or magnetic properties,
**characterised in**
**that** the heating plate is connected to the heating (12) by thermally insulating bolts (38).

2. A packaging machine according to Claim 1, **characterised in that** the processing tool can be heated by means of an induction heater.

3. A packaging machine according to Claim 1, **characterised in that** two or more processing tools can be heated by means of one or more induction heaters.

4. A packaging machine according to any one of the preceding Claims, **characterised in that** a heat-insulating zone (36,37) is arranged at least in sections between the heating (12) and the processing tool.

5. A packaging machine according to Claim 4, **characterised in that** the heat-insulating zone (36,37) is in the form of an air gap.

6. A packaging machine according to Claim 4, **characterised in that** the heat-insulating zone (36,37) is produced from a heat-insulating material, for example from a heat-insulating plastics material.

7. A packaging machine according to any one of the preceding Claims, **characterised in that** the heating (12) comprises a plurality of induction coils (13).

8. A packaging machine according to Claim 7, **characterised in that** the induction coils (13) are arranged in the form of a matrix.

9. A packaging machine according to Claim 7 or 8, **characterised in that** the position and/or number of the induction coils (13) is variable.

10. A packaging machine according to any one of Claims 7 to 9, **characterised in that** the induction coils (13) are in the form of interchangeable elements.

11. A packaging machine according to any one of Claims 7 to 10, **characterised in that** the position and/or orientation of the induction coils (13) is chosen so that, accordingly, essentially only one or more specific zones of the heating plate (12) to be heated thereby are heated.

12. A packaging machine according to any one of Claims 7 to 11, **characterised in that** the control parameters for the operation of the induction coils (13) can be preset so that essentially only a specific layer depth of the heating plate (12) to be heated are heated thereby.

## Revendications

1. Machine d'emballage (1) destinée à réaliser des emballages, préférablement en forme de cuvette, à remplir de marchandises (7), dans laquelle un chauffage (12) conçu comme un chauffage à induction associé à un outil de traitement est pourvu, et dans laquelle le chauffage à induction est agencé de telle sorte que des courants de Foucault produits par induction peuvent être produits dans l'outil de traitement au moyen du chauffage à induction pour le chauffage direct de l'outil de traitement, dans laquelle l'outil de traitement est conformé comme une plaque chauffante et comporte au moins dans certaines zones un matériau conducteur d'électricité et/ou à propriétés magnétiques, **caractérisée**
**en ce que** la plaque chauffante est connectée au chauffage (12) par des goujons thermo-isolants (38).

2. Machine d'emballage selon la revendication 1, **caractérisée en ce que** l'outil de traitement peut être chauffé à l'aide d'un chauffage à induction.

3. Machine d'emballage selon la revendication 1, **caractérisée en ce que** deux outils de traitement ou plus peuvent être chauffés à l'aide d'un chauffage à induction ou plus.

4. Machine d'emballage selon l'une des revendications précédentes, **caractérisée en ce qu'**une zone thermo-isolante (36, 37) est agencée au moins par sections entre le chauffage (12) et l'outil de traitement.

5. Machine d'emballage selon la revendication 4, **caractérisée en ce que** la zone thermo-isolante (36, 37) est constituée sous forme d'un intervalle d'air.

6. Machine d'emballage selon la revendication 4, **caractérisée en ce que** la zone thermo-isolante (36, 37) est fabriquée à l'aide d'un matériau thermo-isolant, tel qu'un plastique thermo-isolant.

7. Machine d'emballage selon l'une des revendications précédentes, **caractérisée en ce que** le chauffage (12) comporte plusieurs bobines d'induction (13).

8. Machine d'emballage selon la revendication 7, **caractérisée en ce que** les bobines d'induction (13) sont agencées sous forme d'une matrice.

9. Machine d'emballage selon la revendication 7 ou 8, **caractérisée en ce que** la position et/ou le nombre des bobines d'induction (13) sont variables.

10. Machine d'emballage selon l'une des revendications 7 à 9, **caractérisée en ce que** les bobines d'induction (13) sont constituées d'éléments interchangeables.

11. Machine d'emballage selon l'une des revendications 7 à 10, **caractérisée en ce que** la position et/ou l'orientation des bobines d'induction (13) sont choisies de manière à ce qu'essentiellement une seule ou plusieurs zones déterminées qui doivent chauffer la plaque chauffante (12) sont chauffées.

12. Machine d'emballage selon l'une des revendications 7 à 11, **caractérisée en ce que** les paramètres de contrôle des bobines d'induction (13) peuvent être préréglés de manière à chauffer essentiellement une seule profondeur de couche déterminée de la plaque chauffante (12) à chauffer.
